# EUROPEAN PATENT SPECIFICATION

(11) **EP 3 333 447 B1**
(45) Date of publication and mention of the grant of the patent: **26.08.2020**
(21) Application number: 16202672.8
(22) Date of filing: 07.12.2016
(51) Int. Cl.: F16F 9/52, F16F 9/14

(54) **HYDRAULIC ROTARY SHOCK ABSORBER**
HYDRAULISCHER ROTATIONSSTOSSDÄMPFER
AMORTISSEUR ROTATIF HYDRAULIQUE

(43) Date of publication of application: 13.06.2018
(73) Proprietor: Piedrafita Sport S.L., 28860 Madrid (ES)
(72) Inventor: Barrada Buch, Luis, 28701 Madrid (ES); Pla, Olivier Jean André, 28006 Madrid (ES); Ankenbauer, Christian, 81371 Munich (DE)
(74) Representative: Grünecker Patent- und Rechtsanwälte PartG mbB

(56) References cited:
- EP-A1- 2 693 073
- US-A- 2 997 140
- US-A1- 2009 159 382

## Description

The present invention relates to a hydraulic rotary shock absorber, comprising a stator and a rotor with a central chamber, wherein hydraulic chambers are defined in between the stator and the rotor, and wherein at least two hydraulic chambers are connected via a first hydraulic link. The present invention relates to a manufacturing method and use of a hydraulic rotary shock absorber.

EP 2 693 073 A1 discloses a rotary damper with a rotor in a case, wherein flow paths in the rotor vanes are provided with a check valve and a pressure regulating valve, such that a damping torque is generated by flow of a viscous fluid in between chambers on opposite sides of the vanes.

US 2,054,467 and EP 0 136 299 B1 both disclose rotary hydraulic shock absorbers, wherein the chambers of a set of high-pressure chambers and low-pressure chambers are in communication via respective radial ducts through the rotor hub.

EP 1 600 660 B1 discloses a torsional vibration damper, wherein each set of chambers is connected via radial channels to collecting spaces inside the rotor, the collecting spaces being connected over damping valves in a separating wall.

US 2,997,140 discloses a rotary damper having hydraulic links comprising circumferential channels and a temperature compensating valve.

US 2009/0159382 A1 discloses a rotary viscous damper, wherein inside the stator a main shaft is arranged, which comprises at least one channel or groove to provide the desired damping characteristics.

It is the object of the present invention to provide an improved design of a hydraulic rotary shock absorber, in particular with a more versatile arrangement of hydraulic links and further components in the rotor.

The invention provides a hydraulic rotary shock absorber, comprising a stator and a rotor with a central chamber, wherein hydraulic chambers are defined in between the stator and the rotor, wherein at least two hydraulic chambers are connected via a first hydraulic link, and wherein the first hydraulic link comprises a circumferentially extending channel being arranged in the rotor radially outside the central chamber, wherein the central chamber of the rotor comprises a hydraulic compensation chamber, which is hydraulically connected over a valve to at least one of the hydraulic chambers.

The hydraulic rotary shock absorber may in particular be a rotary damping device. The arrangement of circumferentially extending channels together with a central chamber in the rotor enables to provide alternative, beneficial flow routes for the hydraulic fluid. Further, the central chamber may accommodate further components which enable a compact design of the shock absorber and/or to provide additional functionality to the rotor.

Preferably, the hydraulic link comprises radial bores, holes or channels in the rotor, which connect the hydraulic chambers with the circumferentially extending channel. In preferred embodiments, the hydraulic link connects analogue hydraulic chambers, i.e. chambers which are supposed to have substantially the same pressure. The hydraulic chambers are in particular provided in a stator chamber in which the rotor having at least one rotor vane is movably arranged. Preferably, the hydraulic chambers are formed in between stator ribs defining the stator chamber and rotor vanes. The volume of the hydraulic chambers depends on the relative rotation of stator and rotor.

Preferably, the circumferentially extending channel is arranged radially inside of the vanes of the rotor. The central chamber may be at the same axial position as the first hydraulic link. The central chamber may form a hydraulic chamber, whose volume is, however, not directly defined by the relative rotation in between stator and rotor, but preferably independent thereof.

The arrangement of the hydraulic compensation chamber allows a beneficial and compact design of the shock absorber, as the compensation chamber is centrally arranged in the rotor. In the prior art, the compensation chamber has to be arranged at a different position, as hydraulic links are provided centrally in the rotor. In particular, the compensation chamber comprises a piston in the form of a movable wall, which is subjected to an external force or pressure, such as provided by a compressed air cushion, and, thus, allows compensating for different volumes of hydraulic fluid in the compensation chamber, while maintaining a substantially constant pressure.

In particular, the rotor may comprise an inner rotor part and an outer rotor part, wherein the first hydraulic link is defined in between the inner rotor part and the outer rotor part. This allows beneficial manufacturing of the rotor, as the hydraulic link may be formed in one or both of the inner and outer rotor parts. Furthermore, the respective rotor parts may be manufactured according to the requirements, e.g. by using suitable material and manufacturing techniques, which allow forming not only the hydraulic link, but also the central chamber in the inner rotor part.

Preferably, a groove is provided on the radially outer side of the inner rotor part and/or on the radially inner side of the outer rotor part, the groove or grooves extending in the circumferential direction of the rotor, so as to define the first hydraulic link. Thus, in between the inner rotor part and outer rotor part a channel is defined for the first hydraulic link. A undercut may be provided at the axial interface of the inner and outer rotor part

The inner rotor part and outer rotor part are formed such that their respective radially outer surface and radially inner surface correspond to each other at least in the region of the first hydraulic link, such that when the inner rotor part is arranged in the outer rotor part, the respective surfaces prevent hydraulic fluid from leaking from the hydraulic link.

In a preferred embodiment, at least one welding seam connects the inner rotor part and the outer rotor part. In addition to fixing the inner and outer rotor part to each other, the welding seam enables to seal the first hydraulic link.

Preferably, welding seams are provided on both sides of the or any circumferentially extending channel. Thus, the welding seams enable that the channel is closed in both sides. In particular, the welding seams are provided on both axial sides of the channel.

In a preferred embodiment, the at least one welding seam is applied from the inside of the inner rotor part and extends through the inner rotor part and into the outer rotor part. In particular, the welding seam is present at the radially inner surface of the inner rotor part. The inner surface of the inner rotor part may be turned, milled or grinded in the region of the welding seam, to provide a smooth surface. In particular, the inner surface of the inner rotor part may form a wall of the central chamber.

Preferably, at least one welding seam is arranged in an angle of 30° to 60° regarding the radial direction, more preferably in an angle of about 45° regarding the radial direction. This enables a stable connection and beneficial sealing properties in between the inner rotor part and outer rotor part

In one embodiment, the rotor comprises a central hub and vanes extending substantially radially from the central hub, wherein the circumferentially extending channel is located only in the radially outer half of the central hub. Thus, the circumferentially extending channel is not present in the rotor vanes or in an inner half of the central hub, which enables that other components can be provided inside the central hub. The respective rotor parts may be formed relatively thin while having sufficient stability. Thus, the functionality of the shock absorber may be increased and/or its size may be reduced.

In particular, the circumferentially extending channel extends around at least 90° of the circumference of the rotor. This enables to connect hydraulic chambers which are distant from each other and/or do not share a common rotor vane. Preferably, the welding seam extends for at least the same circumference as the circumferentially extending channel, and preferably not more than 30° more than the circumferentially extending channel. In some embodiments, the welding seam may extend around the whole circumference of the rotor, which reliably prevents any leakage.

In a preferred embodiment, the circumferentially extending channel extends around the whole circumference of the rotor, forming a ring channel. Thus, hydraulic chambers in any position along the whole circumference of the rotor may be connected. Furthermore, such a ring channel allows a beneficial flow of fluid in between the hydraulic chambers. Preferably, the welding seams are provided accordingly around the whole circumference of the rotor. Alternatively, local welding seams or welding spots may be provided at discrete parts of the circumference.

In a preferred embodiment, the at least two hydraulic chambers form part of a first set of chambers, and furthermore a second set of chambers with at least two chambers is provided, wherein the chambers of the first set and the chambers of the second set are alternatingly arranged along the circumference and are connected over a hydraulic connection with a damping device. Preferably, the damping device is a throttle. Thus, when the rotor rotates relative to the stator, fluid flows from the chambers of the first set to the chambers of the second set or the other way around, depending on the relative rotation direction. At the same time, pressure differences in between the chambers of the first set are equalized by flow through the hydraulic link. Thus, the pressure in the chambers of the first set will be substantially the same, which allows beneficial and reliable operation of the shock absorber. Preferably, in addition to the first hydraulic link in between the chambers of the first set, a second hydraulic link in between the chambers of the second set is provided. The second hydraulic link enables to equalize the pressures in between the chambers of the second set, adding to the reliable operation of the shock absorber. The first and second set are preferably at the same radial position and in an axial distance.

Depending on the relative rotation of the rotor regarding the stator, the volume of the chambers of the first set of chambers decreases, while the volume of the chambers of the second set increases, or vice versa. Thus, when the pressure in the chambers of the first set increases, the pressure in chambers of the second set decreases. The pressure difference forces fluid through the hydraulic connection with the damping device, and thus, energy is dissipated. This enables the rotational damping effect of the hydraulic rotary shock absorber.

In an alternative embodiment, the volume of one chamber of the at least two hydraulic chambers may increase while the volume of the other chambers decreases, such that due to pressure differences in between the chambers fluid flows through the hydraulic link. In this case, the hydraulic link provides the damping, in particular by a damping means, such as a throttle, arranged therein.

The invention furthermore provides a manufacturing method for a rotor of a hydraulic rotary shock absorber, wherein initially an outer rotor part with vanes is provided, then an inner rotor part is arranged in the outer rotor part, wherein the radially outer side of the inner rotor part is partially in contact with the inner radial surface of the outer rotor part, such that at least one circumferentially extending channel is formed in between the inner rotor part and the outer rotor part, wherein the connecting of the inner rotor part and outer rotor part is effected by electron beam welding. Finally, the inner rotor part and the outer rotor part are connected. This enables to form a rotor having the circumferentially extending channel, wherein the circumferentially extending channel is in particular provided in the central hub of the rotor, while the outer rotor part provides the rotor vanes. The inner rotor part may further provide a central chamber, in particular radially inside the circumferentially extending channel. The inner rotor part is preferably slid inside the outer rotor part, until it comes in contact with a dead stop, which may comprise an undercut.

Preferably,. The connection effected by electron beam welding may at the same time serve as a seal at the axial sides of the circumferentially extending channel, preventing that fluid may leak from the circumferentially extending channel in between the inner rotor part and outer rotor part. Alternatively, the inner and outer rotor part may be connected by friction welding, soldering, or by a mechanical connection with form-fit and/or friction-fit, e.g. by screws.

The invention further provides the use of a hydraulic rotary shock absorber which comprises chambers formed between an inner rotor and an outer stator, wherein at least two chambers are connected via a hydraulic link to reduce pressure differences in between the chambers, wherein the hydraulic channels are provided in a circumferential wall of the rotor. The circumferential wall of the rotor circumferentially extends around a central chamber in the rotor, which provides a hydraulic compensation chamber.

In particular, the invention relates to a hydraulic rotary shock absorber in the form of a rotary damper, more particular a hydraulic heavy duty rotary damper for use in high mobility and heavy vehicles.

The invention will now be explained with reference to an exemplary embodiment, as shown in the following figures.
Fig. 1 shows a cross-section through a hydraulic rotary shock absorber according to an embodiment of the invention.
Fig. 2 shows the cross section a - a as indicated in Fig. 1.
Fig. 3 shows the partial cross-section b - b as indicated Fig. 2.

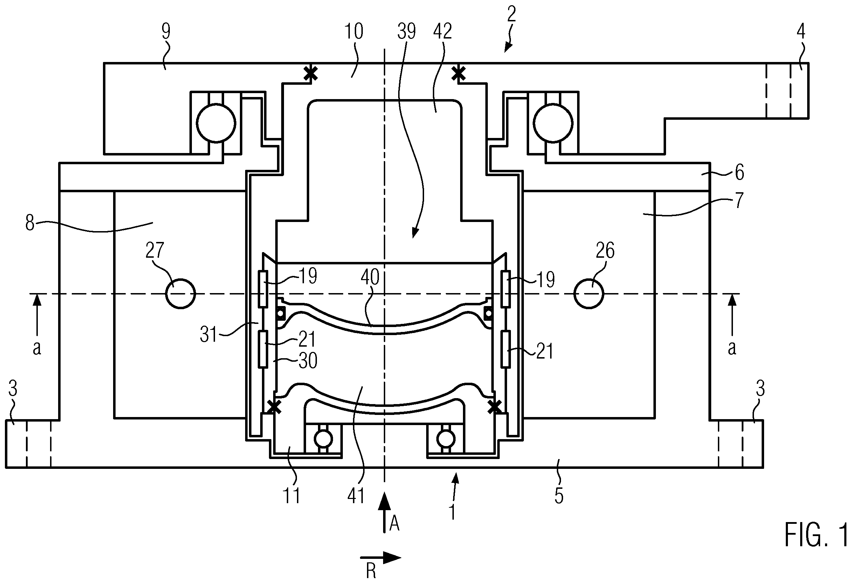

Fig. 1 shows a cross-section of a hydraulic shock absorber according to an embodiment of the invention comprising a stator 1 and a rotor 2, which is rotatably mounted around the axial direction A in the stator 1.

The stator comprises mounting protrusions 3, with which it may be mounted in its operation location, for example by screws. The rotor 2 comprises an arm 4, wherein the arm 4 serves as a lever to translate a linear movement of a component fixed to the arm 4 into a rotation of the rotor 2. Other interfaces of the stator 1 and rotor 2 to components of a system, in between which shock absorption should be enabled, could be provided. The stator 1 comprises a cup-like first part 5 and a cap-like second part 6, which is fixed to the first part 5, such that an inner volume in the stator 1 is created, in which the rotor 2 may rotate. To define hydraulic chambers, the stator 1 comprises first and second ribs 7, 8 extending in the radial direction R towards the rotor 2.

The rotor comprises an upper mounting part 9, which provides the arm 4, a central hub 10, and lower mounting part 11. The upper and lower mounting parts 9, 11 are fixed to the central hub 10, wherein in particular for the connection in between the upper mounting part 9 and the central hub 10 high stability requirements are necessary, as torque is transmitted in between these parts. The connection is preferably mechanical, i.e. a form-fit and/or a friction-fit with screws.

The rotor 2 comprises rotor vanes 12, 13 which are provided radially outside the central hub 10, which rotate relative to the stator ribs 7, 8 when the rotor 2 is rotated with respect to the stator 1. In between the first rotor vane 12 and the first stator rib 7, a first hydraulic chamber 14 is defined. In between the first stator rib 7 and the second rotor vane 13 a second hydraulic chamber 15 is defined. In between the second rotor vane 13 and the second stator rib 8 a third hydraulic chamber 16 is defined. In between the second stator rib 8 and the first rotor vane 12 a fourth hydraulic chambers 17 is defined.

The hydraulic chambers 14, 15, 16, 17 are filled with hydraulic fluid, preferably in the form of hydraulic oil.

The first hydraulic chamber 14 and the third hydraulic chamber 16 form a first set of hydraulic chambers which is connected by a first hydraulic link comprising a substantially radially bore 18, a circumferentially extending channel 19 and a second radial bore 20. The first and third hydraulic chambers 14, 16 can be considered as analogue chambers, and their volume will decrease or increase analogously when the rotor 2 is rotated with respect to the stator 1. The first hydraulic link enables to equalize pressure differences in between the first and third hydraulic chambers 14, 16.

The second and fourth hydraulic chambers 15, 17 also form a pair of analogue chambers, and are connected by a second hydraulic link comprising the circumferentially extending channel 21. By providing the first and second hydraulic link, to hydraulically connect the respective analogue chambers 14, 16; 15, 17 the hydraulic behavior becomes more predictable and repetitive. As the set of hydraulic chambers comprises more than one chamber, it is generally recommendable to link the analogue chambers of the set.

The rotor vanes 12, 13 comprise seals 22, 23 contacting the circumferentially inner stator wall and the stator ribs 7, 8 comprise seals 24, 25 contacting the circumferentially outer wall of the central hub 10 of the rotor 2 to ensure a proper sealing of the hydraulic chambers 14, 15, 16, 17.

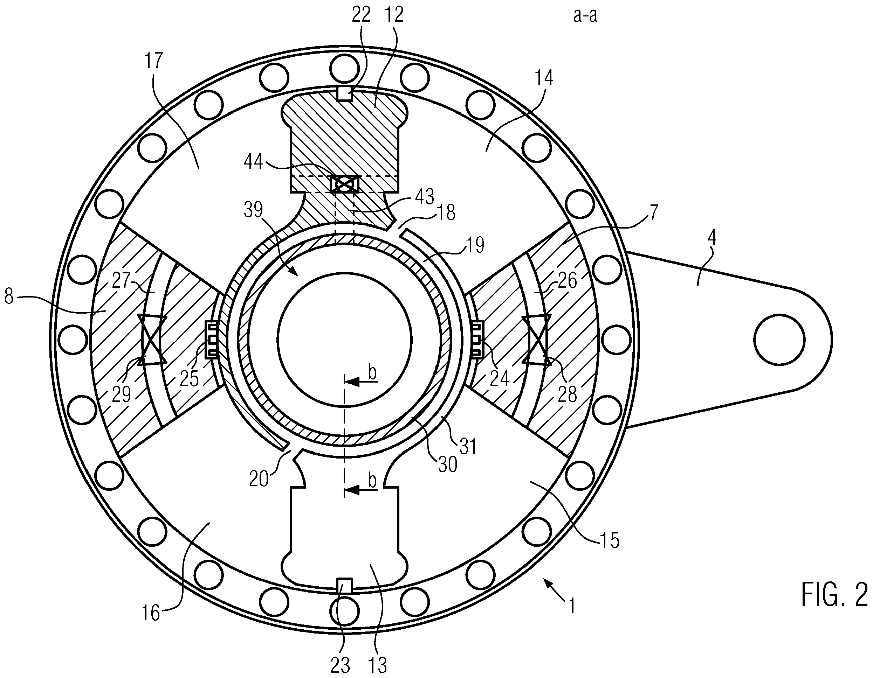

When the rotor 2 is rotated in the clockwise direction in Fig. 2, the volume of the hydraulic chambers 14, 16 of the first set of hydraulic chambers decreases, while the volume of the hydraulic chambers 15, 17 of the second set increases. Thus, hydraulic fluid from the first set of chambers 14, 16 is forced through hydraulic connections 26, 27 which comprise a damping device 28, 29 in the form of a throttle or a pressure regulating valve. Thus, energy is dissipated when the rotor 2 rotates with respect to the stator 1 and a damping effect is obtained.

In the following, the design of the first and second hydraulic links comprising the circumferentially extending channels 19, 21 is described in more detail.

The central hub 10 of the rotor 2 comprises an inner rotor part 30 and an outer rotor part 31, wherein the vanes 12, 13 may be formed integrally with the outer rotor part 31. The inner rotor part 30 has substantially the form of a hollow cylinder and may be inserted by sliding in the axial direction A into the outer rotor part 31. The inner rotor part 30 comprises a first groove 32 and a second groove 33 formed in its radially outer circumferential surface. The outer rotor part 31 comprises corresponding a first groove 34 and a second groove 35 in its radially inner circumferential surface.

The first groove 32 of the inner rotor part 30 and the first groove 34 of the outer rotor part 31 formed together the circumferentially extending channel 19. Accordingly, the second groove 33 of the inner rotor part 30 and the second groove 35 of the outer rotor part 31 form together the second circumferentially extending channel 21.

The inner rotor part 30 and the outer rotor part 31 are fixed to each other by electron beam welding. In particular, welding seams 36, 37, 38 are applied extend both into the inner and outer rotor part 30, 31. The welding seams 36, 37 are provided on both sides of the first circumferentially extending channel 19 and the welding seams 37, 38 are provided on both sides of the second circumferentially extending channel 21. As the welding seams extend fully along the circumferentially extending channels, in particular around the whole circumference of the rotor, the welding seams 36, 37, 38 close the circumferentially extending channels, such that no leakage therefrom is possible.

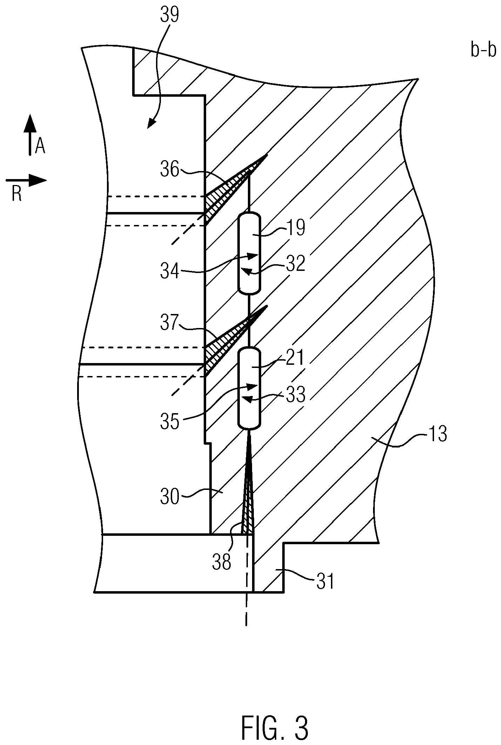

Preferably, at least the inner and outer rotor parts 30, 31 are made of a high tensile steel, and therefore electron beam welding is a suitable welding technology. As can be seen in Fig. 3, the welding seams 36, 37 are applied from the inside of the inner rotor part 30 in an angle of about 45° with respect to the radial direction R of the rotor 2. Welding seam 38 is provided at about 90° to the radial direction R, i.e. in the axial direction A of the rotor 2. The respective outer welding seams 36, 38 are provided such that they extend along a surface interface in between the inner rotor part 31 and the outer rotor part 31 to enable best connection and sealing properties. The central welding seam 37 is provided such that it extends fully through the inner rotor part 30 and into the outer rotor part 31.

As can be seen in Fig. 1, the upper mounting part 9 of the rotor 2 is mounted over a bearing in the first part 5 of the stator. The lower mounting part 11 is mounted over a bearing in the second part 6 of the stator, in particular in a local recess thereof. The bearings are preferably roller bearings, wherein in between the hydraulic chambers 14, 15, 16, 17 and the bearings, appropriate seals are provided for preventing hydraulic fluid to leak. Furthermore, a seal may be provided in between the bearing and the outside.

Inside the rotor 2, a central chamber 39 is provided. The outer circumferential wall of the central chamber 39 is provided by the rotor 2, and in particular by the inner rotor part 30 and optionally as shown in the present embodiment also the outer rotor part 31. The central chamber 39 is closed by the lower mounting part 11. A plate-like piston 40 , which is in particular movable in the axial direction A, is arranged in the central chamber 39 to define a compensation chamber 41. In particular, the compensation chamber 41 is defined in between the piston 40 and the lower mounting part 11. The compensation chamber 41 serves as a hydraulic fluid reservoir. One side of the piston 40 closes the hydraulic fluid reservoir in the central chamber 39, while the other side is subjected to a pressure, in particular in the form of pressurized gas provided in a gas cushion chamber 42. This enables that a substantially constant pressure in the central chamber 39 can be obtained. The gas cushion chamber 42 is defined in an inner cavity of the central chamber 39 closed by the piston 40. The piston 40 is provided with a circumferential seal to prevent leakage in between the compensation chamber 41 and the gas cushion chamber 42.

The compensation chamber 41 of the central chamber 39 is connected via a hydraulic link 43 and a valve 44 to the first and second set of hydraulic chambers. If the pressure in one of the chambers is lower than the pressure in the compensation chamber 41, fluid from the compensation chamber 41 will be provided through the hydraulic link 43 and valve 44 to the respective chamber. In particular, the hydraulic link 43 and valve 44 are provided in at least one of the rotor vanes 12, 13.

However, the central chamber 39 may also be used for other elements of a rotary shock absorber instead of a compensation chamber, such as for example to provide space for an external shaft or other hydraulic components than the compensation chamber.

In the present embodiment, two pairs of active chambers, i.e. four chambers in total, are provided. However, it is also possible to provide three or more pairs of active chambers, wherein the respective sets of chambers can be connected via circumferentially extending links according to the invention.

As can be seen in Fig. 1, the inner rotor part 30 and the outer rotor part 31 form together a circumferential wall around the central chamber. The present invention provides a robust design, as the hydraulic channels are provided inside the circumferential wall of the rotor 2 and the central chamber provides space to include further components of the shock absorber internally.

Preferably, the ratio in between the thickness of the circumferential wall and the diameter of the inner rotor part 30 is less than 20%, preferably less than 10%. The circumferentially extending channel may have a radial height of preferably more than 20%, more preferably more than 30%, of the thickness of the circumferential wall in which it is provided.

## Claims

1. Hydraulic rotary shock absorber, comprising a stator (1) and a rotor (2) with a central chamber (39),
wherein hydraulic chambers (14,15,16,17) are defined in between the stator (1) and the rotor (2), wherein at least two hydraulic chambers (14,16) are connected via a first hydraulic link, and wherein the first hydraulic link comprises a circumferentially extending channel (19) being arranged in the rotor (2) radially outside the central chamber (39),
**characterized in that**
the central chamber (39) of the rotor (2) provides a compensation chamber (41), which is hydraulically connected over a valve (44) to at least one of the hydraulic chambers (14,15,16,17).

2. Hydraulic rotary shock absorber according to claim 1, wherein the rotor (2) comprises inner rotor part (30) and an outer rotor part (31), wherein the first hydraulic link is defined in between the inner rotor part (30) and the outer rotor part (31).

3. Hydraulic rotary shock absorber according to claim 2, wherein a groove (32,34) is provided on the radially outer side of the inner rotor part (30) and/or on the radially inner side of the outer rotor part (31), the groove (32,34) extending in the circumferential direction of the rotor (2), so as to define at least part of the first hydraulic link.

4. Hydraulic rotary shock absorber according to claim 2 or 3, wherein at least one welding seam (36,37,38) connects the inner rotor part (30) and the outer rotor part (31).

5. Hydraulic rotary shock absorber according to any one of claims 2 to 4, wherein welding seams (36,37,38) are provided on both sides of the circumferentially extending channel.

6. Hydraulic rotary shock absorber according to any one of claims 2 to 5, wherein at least one welding seam (36,37) is applied from the inside of the inner rotor part (30), such that it extends through the inner rotor part (30) and into the outer rotor part (31).

7. Hydraulic rotary shock absorber according to any one of claims 2 to 6, wherein at least one welding seam (36,37) is arranged in an angle of 30° to 60° regarding the radial direction R, preferably in an angle of about 45° regarding the radial direction R.

8. Hydraulic rotary shock absorber according to any one of the preceding claims, wherein the rotor (2) comprises a central hub (10) and vanes (12,13) extending substantially radially from the central hub (10), wherein the circumferentially extending channel (19) is located only in the radially outer half of the central hub (10).

9. Hydraulic rotary shock absorber according to any one of the preceding claims, wherein the circumferentially extending channel (19) extends around at least 90° of the circumference of the rotor (2).

10. Hydraulic rotary shock absorber according to any one of the preceding claims, wherein the at least two hydraulic chambers (14,16) form part of a first set of chambers, and furthermore a second set of chambers with at least two hydraulic chambers (15,17) is provided, wherein the hydraulic chambers (14,16) of the first set and the hydraulic chambers (15,17) of the second set are alternatingly arranged along the circumference and are connected over a hydraulic connection (26,27) with a damping device (28,29).

11. Hydraulic rotary shock absorber according to claim 10, wherein in addition to the first hydraulic link in between the chambers (14,16) of the first set, a second hydraulic link in between the chambers (15,17) of the second set is provided.

12. Manufacturing method for a rotor of a hydraulic rotary shock absorber according to any one of the previous claims, comprising the steps:
providing an outer rotor part (31) having vanes (12,13),
arranging an inner rotor part (30) in the outer rotor part (31), wherein the radially outer side of the inner rotor part (30) is partially in contact with inner radial surface of the outer rotor part (31), such that at least one circumferentially extending channel (19,21) is formed in between the inner rotor part and the outer rotor part, and
connecting the inner rotor part (30) and outer rotor part (31),
wherein the connecting of the inner rotor part (30) and outer rotor part (31) is effected by electron beam welding.

13. Use of a hydraulic rotary shock absorber which comprises chambers (14,15,16,17) formed between an inner rotor (2) and an outer stator (31), wherein at least two chambers (14,16;15,17) are connected via a hydraulic link to reduce pressure differences in between the chambers (14,16; 15,17), wherein the hydraulic channels are provided in a circumferential wall of the rotor (2), and
wherein the circumferential wall circumferentially extends around a central chamber (39) in the rotor (2) which provides a hydraulic compensation chamber (41).

## Patentansprüche

1. Hydraulischer Drehstoßdämpfer, umfassend einen Stator (1) und einen Rotor (2) mit einer zentralen Kammer (39),
wobei Hydraulikkammern (14, 15, 16, 17) zwischen dem Stator (1) und dem Rotor (2) definiert sind, wenigstens zwei Hydraulikkammern (14, 16) über eine erste Hydraulikverbindung verbunden sind und die erste Hydraulikverbindung einen sich in Umfangsrichtung erstreckenden Kanal (19) umfasst, der in dem Rotor (2) radial außerhalb der zentralen Kammer (39) angeordnet ist,
**dadurch gekennzeichnet, dass**
die zentrale Kammer (39) des Rotors (2) eine Ausgleichskammer (41) bereitstellt, die über ein Ventil (44) hydraulisch mit wenigstens einer der Hydraulikkammern (14, 15, 16, 17) verbunden ist.

2. Hydraulischer Drehstoßdämpfer nach Anspruch 1, bei dem der Rotor (2) einen inneren Rotorteil (30) und einen äußeren Rotorteil (31) umfasst, wobei die erste Hydraulikverbindung zwischen dem inneren Rotorteil (30) und dem äußeren Rotorteil (31) definiert ist.

3. Hydraulischer Drehstoßdämpfer nach Anspruch 2, bei dem eine Rille (32, 34) an der radial äußeren Seite des inneren Rotorteils (30) und/oder an der radial inneren Seite des äußeren Rotorteils (31) vorgesehen ist, wobei sich die Rille (32, 34) in Umfangsrichtung des Rotors (2) erstreckt, um wenigstens einen Teil der ersten hydraulischen Verbindung zu definieren.

4. Hydraulischer Drehstoßdämpfer nach Anspruch 2 oder 3, bei dem wenigstens eine Schweißnaht (36, 37, 38) den inneren Rotorteil (30) und den äußeren Rotorteil (31) verbindet.

5. Hydraulischer Drehstoßdämpfer nach einem der Ansprüche 2 bis 4, bei dem Schweißnähte (36, 37, 38) auf beiden Seiten des sich in Umfangsrichtung erstreckenden Kanals vorgesehen sind.

6. Hydraulischer Drehstoßdämpfer nach einem der Ansprüche 2 bis 5, bei dem wenigstens eine Schweißnaht (36, 37) von der Innenseite des inneren Rotorteils (30) so aufgebracht ist, dass sie sich durch den inneren Rotorteil (30) und in den äußeren Rotorteil (31) erstreckt.

7. Hydraulischer Drehstoßdämpfer nach einem der Ansprüche 2 bis 6, bei dem wenigstens eine Schweißnaht (36, 37) in einem Winkel von 30° bis 60° bezüglich der radialen Richtung R angeordnet ist, vorzugsweise in einem Winkel von ungefähr 45° bezüglich der radialen Richtung R.

8. Hydraulischer Drehstoßdämpfer nach einem der vorhergehenden Ansprüche, bei dem der Rotor (2) eine zentrale Nabe (10) und Schaufeln (12, 13) umfasst, die sich im Wesentlichen radial von der zentralen Nabe (10) erstrecken, wobei sich der sich in Umfangsrichtung erstreckende Kanal (19) nur in der radial äußeren Hälfte der zentralen Nabe (10) befindet.

9. Hydraulischer Drehstoßdämpfer nach einem der vorhergehenden Ansprüche, bei dem sich der sich in Umfangsrichtung erstreckende Kanal (19) um wenigstens 90° des Umfangs des Rotors (2) erstreckt.

10. Hydraulischer Drehstoßdämpfer nach einem der vorhergehenden Ansprüche, bei dem die wenigstens zwei Hydraulikkammern (14, 16) einen Teil eines ersten Satzes von Kammern ausbilden und weiterhin ein zweiter Satz von Kammern mit wenigstens zwei Hydraulikkammern (15, 17) vorgesehen ist, wobei die Hydraulikkammern (14, 16) des ersten Satzes und die Hydraulikkammern (15, 17) des zweiten Satzes abwechselnd entlang des Umfangs angeordnet sind und über eine Hydraulikverbindung (26, 27) mit einer Dämpfungsvorrichtung (28, 29) verbunden sind.

11. Hydraulischer Drehstoßdämpfer nach Anspruch 10, bei dem zusätzlich zu der ersten Hydraulikverbindung zwischen den Kammern (14, 16) des ersten Satzes eine zweite Hydraulikverbindung zwischen den Kammern (15, 17) des zweiten Satzes vorgesehen ist.

12. Herstellungsverfahren für einen Rotor eines hydraulischen Drehstoßdämpfers nach einem der vorhergehenden Ansprüche, umfassend folgende Schritte:
Bereitstellen eines äußeren Rotorteils (31) mit Schaufeln (12, 13),
Anordnen eines inneren Rotorteils (30) in dem äußeren Rotorteil (31), wobei die radiale Außenseite des inneren Rotorteils (30) teilweise mit der inneren radialen Oberfläche des äußeren Rotorteils (31) in Kontakt steht, so dass zwischen dem inneren Rotorteil und dem äußeren Rotorteil wenigstens ein sich in Umfangsrichtung erstreckender Kanal (19, 21) ausgebildet wird, und
Verbinden des inneren Rotorteils (30) und des äußeren Rotorteils (31),
wobei das Verbinden des inneren Rotorteils (30) und des äußeren Rotorteils (31) durch Elektronenstrahlschweißen erfolgt.

13. Verwenden eines hydraulischen Drehstoßdämpfers, der Kammern (14, 15, 16, 17) umfasst, die zwischen einem inneren Rotor (2) und einem äußeren Stator (31) ausgebildet sind, wobei wenigstens zwei Kammern (14, 16; 15, 17) über eine Hydraulikverbindung verbunden sind, um Druckunterschiede zwischen den Kammern (14, 16; 15, 17) zu verringern, wobei die hydraulischen Kanäle in einer Umfangswand des Rotors (2) vorgesehen sind, und
sich die Umfangswand in Umfangsrichtung um eine zentrale Kammer (39) in dem Rotor (2) erstreckt, der eine hydraulische Ausgleichskammer (41) bereitstellt.

## Revendications

1. Amortisseur hydraulique rotatif comprenant un stator (1) et un rotor (2) avec une chambre centrale (39),
dans lequel des chambres hydrauliques (14, 15, 16, 17) sont définies entre le stator (1) et le rotor (2), dans lequel au moins deux chambres hydrauliques (14, 16) sont connectées via une première liaison hydraulique, et dans lequel la première liaison hydraulique comprend un canal qui s'étend circonférentiellement (19) agencé dans le rotor (2) radialement à l'extérieur de la chambre centrale (39), **caractérisé en ce que**
la chambre centrale (39) du rotor (2) procure une chambre de compensation (41), qui est connectée hydrauliquement via une vanne (44) à au moins une des chambres hydrauliques (14, 15, 16, 17).

2. Amortisseur hydraulique rotatif selon la revendication 1, dans lequel le rotor (2) comprend une partie de rotor interne (30) et une partie de rotor externe (31), dans lequel la première liaison hydraulique est définie entre la partie de rotor interne (30) et la partie de rotor externe (31) .

3. Amortisseur hydraulique rotatif selon la revendication 2, dans lequel une cannelure (32, 34) est pourvue du côté radialement externe de la partie de rotor interne (30) et/ou du côté radialement interne de la partie de rotor externe (31), la cannelure (32, 34) s'étendant en direction circonférentielle du rotor (2) de manière à définir au moins une partie de la première liaison hydraulique.

4. Amortisseur hydraulique rotatif selon la revendication 2 ou 3, dans lequel au moins un joint de soudure (36, 37, 38) connecte la partie de rotor interne (30) et la partie de rotor externe (31).

5. Amortisseur hydraulique rotatif selon l'une quelconque des revendications 2 à 4, dans lequel des joints de soudure (36, 37, 38) sont pourvus des deux côtés du canal qui s'étend circonférentiellement.

6. Amortisseur hydraulique rotatif selon l'une quelconque des revendications 2 à 5, dans lequel au moins un joint de soudure (36, 37) est appliqué depuis l'intérieur de la partie de rotor interne (30), de manière à s'étendre à travers la partie de rotor interne (30) et dans la partie de rotor externe (31).

7. Amortisseur hydraulique rotatif selon l'une quelconque des revendications 2 à 6, dans lequel au moins un joint de soudure (36, 37) est agencé selon un angle de 30° à 60° par rapport à la direction radiale R, de préférence selon un angle d'environ 45° par rapport à la direction radiale R.

8. Amortisseur hydraulique rotatif selon l'une quelconque des revendications précédentes, dans lequel le rotor (2) comprend un moyeu central (10) et des aubes (12, 13) qui s'étendent de manière substantiellement radiale à partir du moyeu central (10), dans lequel le canal qui s'étend circonférentiellement (19) se trouve uniquement dans la moitié radialement externe du moyeu central (10).

9. Amortisseur hydraulique rotatif selon l'une quelconque des revendications précédentes, dans lequel le canal qui s'étend circonférentiellement (19) s'étend autour d'au moins 90° de la circonférence du rotor (2).

10. Amortisseur hydraulique rotatif selon l'une quelconque des revendications précédentes, dans lequel lesdites au moins deux chambres hydrauliques (14, 16) forment partie d'un premier ensemble de chambres, et en outre un deuxième ensemble de chambres avec au moins deux chambres hydrauliques (15, 17) est pourvu, dans lequel les chambres hydrauliques (14, 16) du premier ensemble et les chambres hydrauliques (15, 17) du deuxième ensemble sont agencées alternativement le long de la circonférence et sont connectées via une connexion hydraulique (26, 27) à un dispositif d'amortissement (28, 29).

11. Amortisseur hydraulique rotatif selon la revendication 10, dans lequel, outre la première liaison hydraulique entre les chambres (14, 16) du premier ensemble, une deuxième liaison hydraulique est pourvue entre les chambres (15, 17) du deuxième ensemble.

12. Procédé de fabrication d'un rotor d'un amortisseur hydraulique rotatif selon l'une quelconque des revendications précédentes, comprenant les étapes suivantes :
fourniture d'une partie de rotor externe (31) comportant des aubes (12, 13),
agencement d'une partie de rotor interne (30) dans la partie de rotor externe (31), dans lequel le côté radialement externe de la partie de rotor interne (30) est partiellement en contact avec la surface radiale interne de la partie de rotor externe (31), de telle sorte qu'au moins un canal qui s'étend circonférentiellement (19, 21) est formé entre la partie de rotor interne et la partie de rotor externe, et
connexion de la partie de rotor interne (30) et de la partie de rotor externe (31),
dans lequel la connexion de la partie de rotor interne (30) et de la partie de rotor externe (31) est effectuée via soudage par faisceau d'électrons.

13. Utilisation d'un amortisseur hydraulique rotatif comprenant des chambres (14, 15, 16, 17) formées entre un rotor interne (2) et un stator externe (31),
dans lequel au moins deux chambres (14, 16 ; 15, 17) sont connectées via une liaison hydraulique pour réduire les différences de pression entre les chambres (14, 16 ; 15, 17),
dans lequel les canaux hydrauliques sont pourvus dans une paroi circonférentielle du rotor (2), et
dans lequel la paroi circonférentielle s'étend circonférentiellement autour d'une chambre centrale (39) dans le rotor (2) qui procure une chambre de compensation hydraulique (41).
